(19) Europäisches Patentamt
European Patent Office
Office européen des brevets

(11) **EP 0 849 317 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.[7]: **C08K 5/15**, C08K 3/22, C08L 55/02, C08L 51/04

(21) Anmeldenummer: **97121542.1**

(22) Anmeldetag: **08.12.1997**

(54) **ABS-Formmassen mit verbessertem Geruchsverhalten**

ABS mouldings with reduced odor

Masses à mouler d'ABS à odeur réduite

(84) Benannte Vertragsstaaten:
**BE DE ES FR GB IT NL**

(30) Priorität: **19.12.1996 DE 19652958**

(43) Veröffentlichungstag der Anmeldung:
**24.06.1998 Patentblatt 1998/26**

(73) Patentinhaber: **BAYER AG**
**51368 Leverkusen (DE)**

(72) Erfinder:
- **Eichenauer, Herbert Dr.**
  **41539 Dormagen (DE)**
- **Staratschek, Harry**
  **51069 Köln (DE)**

(56) Entgegenhaltungen:
**EP-A- 0 310 040         GB-A- 1 216 265**
**US-A- 4 129 452**

**Beschreibung**

Die Erfindung betrifft Formmassen auf Basis von ABS-Polymeren mit deutlich verbessertem Geruchsverhalten nach thermoplastischer Verarbeitung.

ABS-Formmassen sind Zweiphasenkunststoffe aus:

1. einem thermoplastischen Copolymerisat harzbildender Monomerer z.B. Styrol und Acrylnitril, wobei das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;

2. mindestens einem Pfropfpolymerisat, welches hergestellt worden ist durch Polymerisation eines oder mehrerer harzbildender Monomerer , z.B. der unter 1.) genannten, in Gegenwart eines Kautschuks, z.B. Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Die Polymerisate 1.) und 2.) können nach bekannten Verfahren, wie Emulsions-, Lösungs-, Masse-, Suspensions-, Fällungspolymerisation oder durch Kombination solcher Verfahren hergestellt werden.

Bei der Verarbeitung dieser ABS-Polymerisate, insbesondere bei hohen Verarbeitungstemperaturen, kommt es häufig zu unerwünschten Geruchsentwicklungen. Diese Eigengerüche können zu Problemen bei speziellen Anwendungen der Formteile (z.B. im Automobilinnenraum) führen.

Aufgabe dieser Erfindung ist es, ABS-Polymerisat-Formmassen herzustellen, die nach der Verarbeitung zu Formteilen keine störenden Gerüche aufweisen. Dabei sollen die sonstigen Eigenschaften der Polymerisate nicht oder nur minimal verändert werden.

Es wurde nun gefunden, daß dies durch Zusatz von geringen Mengen einer Kombination aus Zinkoxid und/ oder Magnesiumoxid und mindestens einer Epoxidgruppen-haltigen Verbindung gelingt.

Gegenstand der Erfindung sind demnach thermoplastische Formmassen aus einem ABS-Polymerisat und 0,05 bis 5 Gew.-%, vorzugsweise 0,1 bis 3 Gew.-% (jeweils bezogen auf ABS-Polymerisat), einer Kombination aus Zinkoxid und/oder Magnesiumoxid und mindestens einer Epoxidgruppen-haltigen Verbindung.

Im einzelnen bestehen die erfindungsgemäßen thermoplastischen Formmassen vorzugsweise aus

I. 100 Gew.-Teilen eines ABS-Polymerisats bestehend aus

1.) 5 bis 100 Gew.-% mindestens eines Pfropfmischpolymerisats, hergestellt durch Pfropfpolymerisation von

1.1) 5 bis 90 Gew.-% einer Mischung aus

1.1.1) 5 bis 50 Gew.-% Acrylnitril, Methacrylnitril, Maleinsäureanhydrid, N-substituiertem Maleinimid oder Mischungen daraus und

1.1.2) 95 bis 50 Gew.-% Styrol, α-Methylstyrol, kernsubstituiertes Styrol, Methylmethacrylat oder Mischungen daraus auf

1.2) 95 bis 10 Gew.-% mindestens eines Kautschuks mit einer Glasübergangstemperatur $T_G < 10°C$ und

2.) 0 bis 95 Gew.-% mindestens eines Thermoplastharzes, hergestellt durch Polymerisation von

2.1) 5 bis 50 Gew.-% Acrylnitril, Methacrylnitril, Maleinsäureanhydrid, N-substituiertem Maleinimid oder Mischungen daraus und

2.2) 95 bis 50 Gew.-% Styrol, α-Methylstyrol, kernsubstituiertem Styrol, Methylmethacrylat oder Mischungen daraus und

II. 0,05 bis 5 Gew.-Teilen einer Kombination aus Zinkoxid und/oder Magnesiumoxid und mindestens einer Epoxidgruppen-haltigen Verbindung.

ABS-Polymerisate im Sinne der Erfindung enthalten 5 bis 100 Gew.-%, vorzugsweise 7,5 bis 80 Gew.-%, und besonders bevorzugt 10 bis 70 Gew.-% mindestens eines Pfropfpolymerisats und 95 bis 0 Gew.-%, vorzugsweise 92,5 bis 20 Gew.-%, und besonders bevorzugt 90 bis 30 Gew.-% mindestens eines Thermoplastharzes.

Pfropfkautschuke im Sinne der Erfindung sind solche, in denen auf einen Kautschuk Monomere oder Monomermischungen ausgewählt aus Acrylnitril, Methacrylnitril, Maleinsäureanhydrid, N-substituiertem Maleinimid, Styrol, $\alpha$-Methylstyrol, kernsubstituiertem Styrol, Methylmethacrylat pfropfpolymerisiert sind.

Geeignete Kautschuke sind praktisch alle Kautschuke mit Glasübergangstemperaturen ≤ 10°C, vorzugsweise solche, die Butadien einpolymerisiert enthalten. Beispiele sind Polybutadien, Styrol-Butadien-Polymerisate, Acrylnitril-Butadien-Polymerisate, Acrylatkautschuke, gegebenenfalls mit eingebauten, von Butadien abgeleiteten Struktureinheiten, Acrylatkautschuke, die einen vernetzen Kautschuk wie Polybutadien oder ein Copolymerisat von Butadien mit einem ethylenisch ungesättigten Monomer wie Styrol und/oder Acrylnitril als Kern enthalten.

Bevorzugt ist Polybutadien.

Die Pfropfpolymerisate enthalten 10 bis 95 Gew.-%, insbesondere 20 bis 70 Gew.-%, Kautschuk und 90 bis 5 Gew.-%, insbesondere 80 bis 30 Gew.-%, pfropfcopolymerisierte Monomere. Die Kautschuke liegen in diesen Pfropfcopolymerisaten in Form wenigstens partiell vernetzter Teilchen eines mittleren Teilchendurchmessers ($d_{50}$) von 0,05 bis 20,0 µm, bevorzugt von 0,1 bis 2,0 µm und besonders bevorzugt von 0,1 bis 0,8 µm, vor, wobei der mittlere Teilchendurchmesser $d_{50}$ mittels Ultrazentrifugenmessung (vergl. W. Scholtan, H. Lange : Kolloid.-Z. u. Z. Polymere 250, (1972), 782-796) bestimmt werden kann.

Geeignete Pfropfcopolymerisate können durch radikalische Pfropfcopolymerisation von Styrol, $\alpha$-Methylstyrol kernsubstituiertem Styrol, z.B. p-Methylstyrol, (Meth)acrylnitril, Methylmethacrylat, Maleinsäureanhydrid, N-substituiertem Maleinimid, vorzugsweise N-Phenylmaleinimid oder Mischungen daraus in Gegenwart der zu bepfropfenden Kautschuke hergestellt werden. Bevorzugte Herstellungsverfahren sind Emulsions-, Lösungs-, Masse- oder Suspensionspolymerisationen; besonders bevorzugt für die Herstellung der erfindungsgemäßen Formmassen ist das Verfahren der Emulsionspolymerisation.

Die thermoplastischen Polymerisate können aus den auf den Kautschuk pfropfpolymerisierten Monomeren (Pfropfmonomeren) oder ähnlichen Monomeren gewonnen werden, insbesondere aus Styrol, $\alpha$-Methylstyrol, p-Methylstyrol, Halogenstyrol, Acrylnitril, Methacrylnitril, Methylmethacrylat, Maleinsäureanhydrid, N-substituierten Maleinimiden, insbesondere N-Phenylmaleinimid, oder Mischungen daraus.

Bevorzugt sind Copolymerisate aus 95 bis 50 Gew.-% Styrol, $\alpha$-Methylstyrol, Methylmethacrylat oder Mischungen daraus mit 5 bis 50 Gew.-% Acrylnitril, Methacrylnitril, Methylmethacrylat, Maleinsäureanhydrid oder Mischungen daraus.

Besonders bevorzugte thermoplastische Copolymerisate enthalten 20 bis 40 Gew.-% Acrylnitril und 80 bis 60 Gew.-% Styrol oder $\alpha$-Methylstyrol einpolymerisiert. Diese Copolymerisate sind bekannt. Sie besitzen vorzugsweise Molekulargewichte von 15 000-200 000.

Erfindungsgemäß in Kombination mit Zinkoxid und/oder Magnesiumoxid einsetzbare geeignete Verbindungen mit mindestens einer Epoxidgruppe sind insbesondere solche Substanzen, die einen Gehalt an Epoxidsauerstoff von 2 bis 20 Gew.-%, vorzugsweise 2,5 bis 15 Gew.-% und besonders bevorzugt 3 bis 10 Gew.-% aufweisen.

Bevorzugt werden flüssige Verbindungen. Diese haben vorzugsweise ein Molekulargewicht unter 2 000, besonders bevorzugt unter 1 500. Beispiele für erfindungsgemäße Verbindungen sind epoxidierte Öle wie z.B. epoxidierte Sojaöle oder epoxidierte Leinöle oder auch Alkylepoxystearat-Verbindungen.

Derartige Verbindungen sind bekannt.

In den erfindungsgemäß verwendbaren Kombinationen aus Zinkoxid und/oder Magnesiumoxid und Epoxidgruppen-haltiger Verbindung können die Komponenten in weiten Bereichen variiert werden.

Dabei beträgt das Gew.-Verhältnis Oxid bzw. Oxidgemisch : Epoxidverbindung 95 : 5 bis 5 : 95, vorzugsweise 80 : 20 bis 20 : 80 und besonders bevorzugt 60 : 40 bis 30:70.

Neben den erfindungsgemäßen Verbindungen können den Formmassen die üblichen Zusätze wie Pigmente, Füllstoffe, Stabilisatoren, Antistatika, Gleitmittel, Entformungsmittel, Flammschutzmittel und dergleichen zugesetzt werden.

Ein weiterer Gegenstand der Erfindung ist ein Verfahren zur Herstellung der erfindungsgemäßen ABS-Polymerisat-Formmassen.

Zu ihrer Herstellung gibt man 0,05 bis 5 Gew.-% , vorzugsweise 0,1 bis 3 Gew.-% (jeweils bezogen auf Formmasse) der Kombination aus Zinkoxid und/oder Magnesiumoxid und Epoxidgruppen-haltiger Verbindung zu dem oben beschriebenen ABS-Polymerisat und mischt es bei höheren Temperaturen, z.B. 100°C bis 300°C ein, in üblichen Mischaggregaten, Knetern, Innenmischern, Walzenstühlen, Schneckenmaschinen oder Extrudern.

Dabei können die Verweilzeiten beim Vermischungsprozeß je nach Intensität der Durchmischung zwischen 10 Sekunden und 30 Minuten variieren.

**Beispiele**

Alle angegebenen Teile bedeuten Gewichtsteile.

### 1. Eingesetzte Komponenten

A) Pfropfkautschuk aus 50 Gew.-% Polybutadien mit einem mittleren Teilchendurchmesser ($d_{50}$) von 0,4 µm, auf das 36 Gew.-% Styrol und 14 Gew.-% Acrylnitril in Emulsion pfropfpolymerisiert wurden.

B) Pfropfkautschuk aus 50 Gew.-% Polybutadien mit einem mittleren Teilchendurchmesser ($d_{50}$) von 0,1 µm, auf das 36 Gew.-% Styrol und 14 Gew.-% Acrylnitril in Emulsion pfropfpolymerisiert wurden.

C) Styrol/Acrylnitril (SAN) = 72 : 28-Copolymerisat mit einem $\overline{M}_w$ von ca. 15 000 mit U = $\overline{M}_w/\overline{M}_n$-1≤ 2 (molekulare Uneinheitlichkeit), hergestellt durch Lösungspolymerisation.

C1) Styrol/Acrylnitril (SAN) = 72 : 28-Copolymerisat mit einem $\overline{M}_w$ von ca. 85 000 mit U = $\overline{M}_w/\overline{M}_n$-1≤ 2 (molekulare Uneinheitlichkeit), hergestellt durch Lösungspolymerisation.

D) α-Methylstyrol/Acrylnitril (AMSAN) = 72 : 28-Copolymerisat mit einem $\overline{M}_w$ von ca. 65 000 mit U = $\overline{M}_w/\overline{M}_n$-1 von ca. 2 (molekulare Uneinheitlichkeit), hergestellt durch Emulsionspolymerisation.

E) Zinkoxid (Merck KGaA)

F) Magnesiumoxid (Merck KGaA)

G) Epoxidiertes Sojaöl (Edenol D 81 der Henkel KGaA)

H) Epoxidiertes Leinöl (Edenol B 316 der Henkel KGaA)

I) Alkylepoxistearat (Edenol B 35 der Henkel KGaA)

### 2. Herstellung und Ausprüfung der Formmassen

Die in Tabelle 1 angegebenen Gewichtsteile der einzelnen Polymerkomponenten wurden zusammen mit 0,1 Gew.-Teilen eines Silikonöls und 2 Gew.-Teilen Ethylendiaminbisstearylamid sowie den in Tabelle 1 angegebenen Zusatzstoffen in einem Innenkneter bei 200°C bis 230°C innerhalb 3 bis 5 Minuten vermischt und das resultierende Gemisch granuliert und anschließend durch Spritzgießen bei 240°C zu Formkörpern verarbeitet.

Die Kerbschlagzähigkeit (Einheit : $kJ/m^2$) wurde bei Raumtemperatur ($a_k^{RT}$) und bei -40°C ($a_k^{-40°C}$) nach ISO 180 A , die Kugeldruckhärte $H_c$ (Einheit: $N/mm^2$) nach DIN 53 456, die Wärmeformbeständigkeit Vicat B (Einheit °C) nach DIN 53 460 ermittelt. Die Beurteilung der Verarbeitbarkeit erfolgte durch Messung des Volumen-Fließindex MVI nach DIN 53 753U (Einheit $cm^3$/10 min).

Die Beurteilung des Geruchsverhaltens erfolgte nach der Empfehlung des Verbandes der Automobilindustrie e.V. (VDA) zur Bestimmung des Geruchsverhaltens von Werkstoffen der Kraftfahrzeug-Innenausstattung vom Oktober 1992 (Geruchstest VDA 270 C3) (siehe Dokumentation Kraftfahrwesen e.V. (DKF), Ulrichstraße 14, Bietigheim-Bissingen).

Bewertungsskala für die Geruchsbeurteilung nach VDA 270

Note 1 nicht wahrnehmbar
Note 2 wahrnehmbar, nicht störend
Note 3 deutlich wahrnehmbar, aber noch nicht störend
Note 4 störend
Note 5 stark störend
Note 6 unerträglich

EP 0 849 317 B1

Tabelle 1:

| Beispiel | A (Gew.-Teile) | B (Gew.-Teile) | C (Gew.-Teile) | C1 (Gew.-Teile) | D (Gew.-Teile) | E (Gew.-Teile) | F (Gew.-Teile) | G (Gew.-Teile) | H (Gew.-Teile) | I (Gew.-Teile) |
|---|---|---|---|---|---|---|---|---|---|---|
| | | | | | Zusammensetzungen der geprüften Formmassen | | | | | |
| 1 | 40 | -- | 60 | -- | -- | 0.5 | -- | 0.5 | -- | -- |
| 2 (Vergleich) | 40 | -- | 60 | -- | -- | -- | -- | -- | -- | -- |
| 3 (Vergleich) | 40 | -- | 60 | -- | -- | 0.5 | -- | -- | -- | -- |
| 4 (Vergleich) | 40 | -- | 60 | -- | -- | -- | -- | 0.5 | -- | -- |
| 5 | 40 | -- | 60 | -- | -- | -- | 0.5 | 0.5 | -- | -- |
| 6 | 40 | -- | 60 | -- | -- | 0.5 | -- | -- | 0.5 | -- |
| 7 | 40 | -- | 60 | -- | -- | 0.5 | -- | -- | -- | 0.7 |
| 8 | 15 | 15 | -- | 70 | -- | 0.5 | -- | 0.5 | -- | -- |
| 9 | 15 | 15 | -- | 70 | -- | -- | 0.6 | -- | 0.8 | -- |
| 10 | 12.5 | 12.5 | -- | -- | 75 | 0.5 | -- | 0.5 | -- | -- |
| 11 (Vergleich) | 12.5 | 12.5 | -- | -- | 75 | -- | -- | -- | -- | -- |

Tabelle 2 :

| Beispiel | $a_k{}^{RT}$ (kJ/m²) | $a_k{}^{-40°C}$ (kJ/m²) | $H_c$ (N/mm²) | Vicat B (°C) | MVI (cm³/10 min) | Geruchsbeurteilung (nach VDA 270 C3) |
|---|---|---|---|---|---|---|
| Prüfdaten der untersuchten Formmassen | | | | | | |
| 1 | 25.8 | 10.6 | 86 | 97 | 9.2 | 1.5 |
| 2 (Vergleich) | 26.8 | 10.9 | 88 | 98 | 9.4 | 3.5 |
| 3 (Vergleich) | 26.9 | 10.6 | 86 | 99 | 9.6 | 3 |
| 4 (Vergleich) | 26.9 | 10.7 | 85 | 96 | 9.7 | 3 |
| 5 | 26.8 | 10.6 | 86 | 98 | 9.4 | 2 |
| 6 | 26.4 | 10.7 | 87 | 97 | 9.3 | 1.5 |
| 7 | 25.9 | 10.5 | 87 | 96 | 9.5 | 2 |
| 8 | 16.0 | 6.1 | 109 | 99 | 34.8 | 1.5 |
| 9 | 15.7 | 6.0 | 110 | 99 | 35.5 | 1.5 |
| 10 | 14.4 | 5.8 | 103 | 113 | 5.6 | 2.5 |
| 11 (Vergleich) | 14.6 | 5.8 | 104 | 114 | 5.0 | 4 |

**Patentansprüche**

**1.** Thermoplastische Formmassen aus einem ABS-Polymerisat und 0,05 bis 5 Gew.-% (bezogen auf ABS-Polymerisat) einer Kombination aus Zinkoxid und/oder Magnesiumoxid und mindestens einer Epoxidgruppen-haltigen Verbindung.

**2.** Thermoplastische Formmassen gemäß Anspruch 1 aus

    I. 100 Gew.-Teilen eines ABS-Polymerisats bestehend aus

        1.) 5 bis 100 Gew.-% mindestens eines Pfropfmischpolymerisats, hergestellt durch Pfropfpolymerisation von

            1.1) 5 bis 90 Gew.-% einer Mischung aus

                1.1.1) 5 bis 50 Gew.-% Acrylnitril, Methacrylnitril, Maleinsäureanhydrid, N-substituiertem Maleinimid oder Mischungen daraus und

                1.1.2) 95 bis 50 Gew.-% Styrol, $\alpha$-Methylstyrol, kernsubstituiertes Styrol, Methylmethacrylat oder Mischungen daraus auf

            1.2) 95 bis 10 Gew.-% mindestens eines Kautschuks mit einer Glasübergangstemperatur $T_G$ < 10°C und

        2.) 0 bis 95 Gew.-% mindestens eines Thermoplastharzes, hergestellt durch Polymerisation von

            2.1) 5 bis 50 Gew.-% Acrylnitril, Methacrylnitril, Maleinsäureanhydrid, N-substituiertem Maleinimid oder Mischungen daraus und

            2.2) 95 bis 50 Gew.-% Styrol, $\alpha$-Methylstyrol, kernsubstituiertem Styrol, Methylmethacrylat oder Mischungen daraus und

II. 0,05 bis 5 Gew.-Teilen einer Kombination aus Zinkoxid und/oder Magnesiumoxid und mindestens einer Epoxidgruppenhaltigen Verbindung.

**3.** Thermoplastische Formmassen gemäß Ansprüchen 1 und 2 herstellbar aus einer Kombination aus Zinkoxid und/oder Magnesiumoxid und einer Epoxidgruppen-haltigen flüssigen Verbindung.

**4.** Thermoplastische Formmassen gemäß Anspruch 3 enthaltend eine Kombination aus Zinkoxid und einer Epoxidgruppen-haltigen flüssigen Verbindung mit einem Gehalt an Epoxidsauerstoff von 2 bis 20 Gew.-%.

**5.** Verfahren zur Herstellung von ABS-Formmassen gemäß Anspruch 1, dadurch gekennzeichnet, daß man 0,05 bis 5 Gew.-% (bezogen auf ABS-Polymerisat) einer Kombination aus Zinkoxid und/oder Magnesiumoxid und mindestens einer Epoxidgruppen-haltigen Verbindung zu einem ABS-Polymerisat gibt und bei einer Temperatur von 100°C bis 300°C vermischt.

**6.** Verfahren zur Herstellung von ABS-Formmassen gemäß Anspruch 5, dadurch gekennzeichnet, daß eine Kombination aus Zinkoxid und einer Epoxidgruppen-haltigen flüssigen Verbindung mit einem Gehalt an Epoxidsauerstoff von 2 bis 20 Gew.-% eingesetzt wird.

**Claims**

**1.** Thermoplastic moulding compositions prepared from an ABS polymer and 0.05 to 5 wt.% (relative to the ABS polymer) of a combination of zinc oxide and/or magnesium oxide and at least one compound containing epoxy groups.

**2.** Thermoplastic moulding compositions according to claim 1 prepared from

I. 100 parts by weight of an ABS polymer consisting of

1.) 5 to 100 wt.% of at least one graft copolymer produced by graft polymerising

1.1) 5 to 90 wt.% of a mixture of

1.1.1) 5 to 50 wt.% of acrylonitrile, methacrylonitrile, maleic anhydride, N-substituted maleimide or mixtures thereof and

1.1.2) 95 to 50 wt.% of styrene, α-methylstyrene, ring-substituted styrene, methyl methacrylate or mixtures thereof onto

1.2) 95 to 10 wt.% of at least one rubber having a glass transition temperature $T_G$ of < 10°C and

2.) 0 to 95 wt.% of at least one thermoplastic resin produced by polymerising

2.1) 5 to 50 wt.% of acrylonitrile, methacrylonitrile, maleic anhydride, N-substituted maleimide or mixtures thereof and

2.2) 95 to 50 wt.% of styrene, α-methylstyrene, ring-substituted styrene, methyl methacrylate or mixtures thereof and

II. 0.05 to 5 parts by weight of a combination of zinc oxide and/or magnesium oxide and at least one compound containing epoxy groups.

**3.** Thermoplastic moulding compositions according to claims 1 and 2 producible from a combination of zinc oxide and/or magnesium oxide and a liquid compound containing epoxy groups.

**4.** Thermoplastic moulding compositions according to claim 3 containing a combination of zinc oxide and a liquid compound containing epoxy groups having an epoxy oxygen content of 2 to 20 wt.%.

**5.** Process for the production of ABS moulding compositions according to claim 1, characterised in that 0.05 to 5 wt. % (relative to ABS polymer) of a combination of zinc oxide and/or magnesium oxide and at least one compound containing epoxy groups is added to an ABS polymer and mixed at a temperature of 100°C to 300°C.

**6.** Process for the production of ABS moulding compositions according to claim 5, characterised in that a combination of zinc oxide and a liquid compound containing epoxy groups having an epoxy oxygen content of 2 to 20 wt.% is used.


**Revendications**

**1.** Matières à mouler thermoplastiques consistant en un polymère ABS et 0,05 à 5 % en poids (par rapport aux polymères ABS) d'une combinaison d'oxyde de zinc et/ou d'oxyde de magnésium et d'au moins un composé à groupes époxyde.

**2.** Matières à mouler thermoplastiques selon la revendication 1, consistant en

   I. 100 parties en poids d'un polymère ABS constitué lui-même de

   1.) 5 à 100 % en poids d'au moins un copolymère greffé préparé par polymérisation greffée de

   1.1) 5 à 90 % en poids d'un mélange de

   1.1.1) 5 à 50 % en poids d'acrylonitrile, de méthacrylonitrile, d'anhydride maléique, d'un maléimide substitué à l'azote ou d'un mélange de tels composés et
   1.1.2) 95 à 50 % en poids de styrène, d'$\alpha$-méthylstyrène, d'un styrène substitué dans le noyau, de méthacrylate de méthyle ou d'un mélange de tels composés, sur

   1.2) 95 à 10 % en poids d'au moins un caoutchouc ayant une température de transition du second ordre $T_G < 10°C$ et

   2.) 0 à 95 % en poids d'au moins une résine thermoplastique préparée par polymérisation de

   2.1) 5 à 50% en poids d'acrylonitrile, de méthacrylonitrile, d'anhydride maléique, d'un maléimide substitué à l'azote ou d'un mélange de tels composés et
   2.2) 95 à 50 % en poids de styrène, d'$\alpha$-méthylstyrène, d'un styrène substitué dans le noyau, de méthacrylate de méthyle ou d'un mélange de tels composés, et

   II. 0,05 à 5 % en parties en poids d'une combinaison d'oxyde de zinc et/ou d'oxyde de magnésium et d'au moins un composé à groupes époxyde.

**3.** Matières à mouler thermoplastiques selon les revendications 1 et 2, préparées à partir d'une combinaison d'oxyde de zinc et/ou d'oxyde de magnésium et d'un composé liquide à groupes époxyde.

**4.** Matières à mouler thermoplastiques selon la revendication 3, contenant une combinaison d'oxyde de zinc et d'un composé liquide à groupes époxyde à une teneur en oxygène d'époxyde de 2 à 20 % en poids.

**5.** Procédé de préparation des matières à mouler ABS selon la revendication 1, caractérisé en ce que l'on ajoute de 0,05 à 5 % en poids (par rapport au polymère ABS) d'une combinaison d'oxyde de zinc et/ou d'oxyde de magnésium et d'au moins un composé à groupes époxyde à un polymère ABS et on mélange à une température de 100 à 300°C.

**6.** Procédé de préparation des matières à mouler ABS selon la revendication 5, caractérisé en ce que l'on utilise une combinaison d'oxyde de zinc et d'un composé liquide à groupes époxyde à une teneur en oxygène d'époxyde de 2 à 20 % en poids.